# EUROPEAN PATENT APPLICATION

(11) **EP 1 434 437 A2**
(43) Date of publication of application: **30.06.2004**
(21) Application number: 03258185.2
(22) Date of filing: 23.12.2003
(51) Int. Cl.: H04N 5/917

(54) **Multimedia recording apparatus with variable compression**

(30) Priority: 27.12.2002 KR 2002085381
(71) Applicant: Samsung Electronics Co., Ltd., Suwon, Gyeonggi-do 442-742 (KR)
(72) Inventor: Chang, Dong-hyun, Suwon-si Gyeonggi-do (KR)
(74) Representative: Geary, Stuart Lloyd

(57) **Abstract**

An apparatus and method for recording multimedia data is disclosed. The apparatus and method employ a receiving unit for receiving compressed multimedia signal, a decoder unit for decoding the multimedia signal to convert it into a data stream having a predetermined format, a data compression unit for reducing the amount of data in the data stream by a certain amount and encoding it, a compression select unit for setting a compressibility of the data compression unit, and a storage unit for storing the encoded data. In accordance with the apparatus for recording the multimedia data, in the case where there is no need to record the video data with high quality, it is possible to increase the recording time of the multimedia data by reducing the data amount of the video signal using a variety of compression methods when the multimedia data is recorded in a storage device.

## Description

The present invention generally relates to an apparatus for recording audio and/or video data, the apparatus comprising a storage unit for storing audio and/or video data.

Digital multimedia data and, in particular digital audio and video signals, are large, typically 1 to hundreds of megabytes. In the case where digital multimedia data is stored in storage devices such as memories and hard disk drives (HDD), the recording time of the storage devices is slower than for analogue multimedia data.

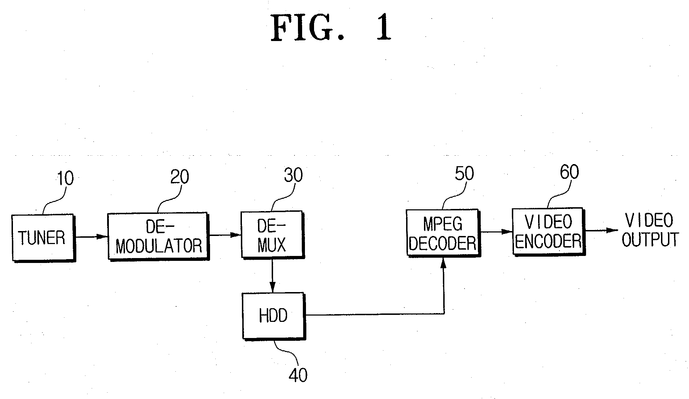

Figure 1 is a block diagram of a conventional set top box capable of recording digital multimedia data. The set top box shown comprises a tuner 10, a demodulator 20, a demultiplexer 30, a hard disk drive (HDD) 40, an MPEG codec 50 and a video encoder 60. The tuner 10 receives broadcasting signals, being sent via a broadcast station or a cable network, and selects one of the received broadcasting signals.

The demodulator 20 removes demodulates the broadcasting signal selected by the tuner 10. The demodulated broadcasting signal comprises a digital data stream which the broadcast station intended to transmit. Presently, the digital data stream is generally encoded in MPEG-2 format. Accordingly, the digital data stream is compressed according to the MPEG-2 standard.

Demultiplexer 30 separates the digital data stream into a video signal and an audio signal. The hard disk drive (HDD) 40 stores the video signal and the audio signal which were separated by the demultiplexer 30. The video signal and the audio signal stored on the hard disk drive (HDD) 40 are compressed according to the MPEG-2 standard.

The MPEG codec 50 and the video encoder 60 reproduce the video signal and audio signal stored on the hard disk drive (HDD). The MPEG codec 50 decompresses the compressed video signal and audio signal according to a standard such as the MPEG-2 standard, and the video encoder 60 converts the decompressed signals into the video format accepted by image display devices such as televisions. The video format is typically either NTSC or PAL and less commonly SECAM.

In a set top box as described above, in the case where a user desires to record long broadcasting programmes that are supplied via the tuner 10, it is necessary to increase the capacity of the hard disk drive (HDD) or to erase the data previously stored in the hard disk drive (HDD) 40. One way to increase the capacity of the hard disk drive (HDD) 40, is to add an additional hard disk drive (HDD). However, this disadvantageously increases the cost of manufacturing the set top box.

There is no need to store the video signal on the hard disk drive (HDD) 40 with high quality if the programmes are news programmes or musical programmes which provide primarily aural experiences from the user's perspective. Therefore, the capacity of the hard disk drive (HDD) is conventionally unnecessarily consumed by MPEG-2 video signals for all programmes.

A recording apparatus, according to the present invention, is characterised by a decoding means for decoding a coded input signal, multimode compression means for selectively compressing decoded signals from the decoding means using a plurality of compression techniques and an encoding means for encoding means for encoding compressed signals output by the multimode compression means, the output of the encoding means being provided to the storage unit for storage.

Switching means may be included for selectively routing input audio and/or video signals to the decoding means or directly to the storage unit.

The multimode compression means enables different levels of compression to be applied depending on the importance of the input signal. For example, a television news signal provides a primarily audio experience for a user and a high level of compression can be applied to the video signal. A user watching a television programme about an painter would wish to see the painter's work clearly and, accordingly, less or no compression of the video signal would be appropriate.

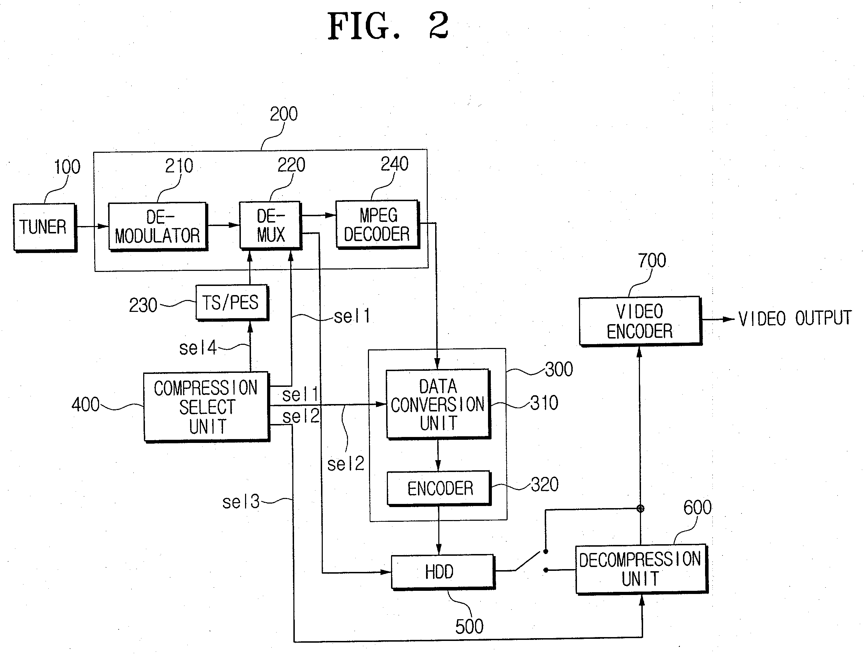

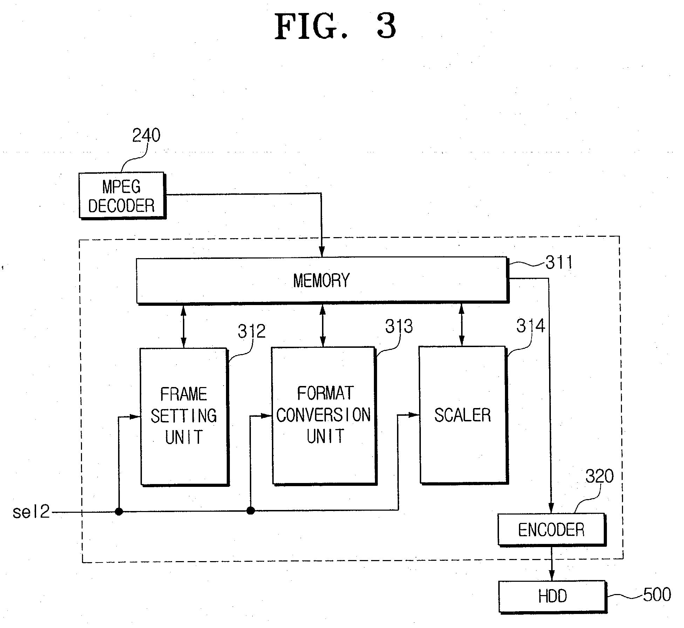

An embodiment of the present invention will now be described, by way of example, with reference to Figures 2 and 3 of the accompanying drawings, in which:
Figure 1 is a block diagram of a conventional set top box capable of recording digital multimedia data;
Figure 2 is a block diagram of a set top box according to the present invention; and
Figure 3 is a detailed block diagram of the data compression unit in the set top box in Figure 2.

Referring to Figure 2, a set top box comprises a tuner 100, a decoder unit 200, a data compression unit 300, a compression selection unit 400, a hard disk drive (HDD) 500, a decompression unit 600 and a video encoder 700.

The tuner 100 selects one of a plurality of broadcasting signals supplied via broadcast stations or a cable network. The received broadcasting signal may be encoded in any one of the MPEG-1 to MPEG-4 standards. However, the present embodiment will be described in the context of MPEG-2 signals. Thus, the broadcasting signal selected by the tuner 100 carriers an MPEG-2 video and audio signal.

The decoder unit 200 demodulates the broadcasting signal selected by the tuner 100 and decodes it, thereby converting the received signal into an MPEG-2 data stream.

The data compression unit 300 is controlled by the compression selection unit 400, and receives the data stream output from the decoder unit 200 and compresses it by at least one method. In order to compress the data stream, this embodiment uses any one of three methods. The first is a method which converts a video signal having typically a 4:4:2 format to a 4:2:0 format. The second is a method which removes even-numbered frames from the video signal. The third is a method which reduces the resolution of the video signal. These methods will be described in further detail below.

The compression selection unit 400 generates, in response to a control signal generated from a setting key (not shown), included on the present set top box, or a remote controller (not shown), a control signal (sel1) for setting the output direction of the data stream output from the demultiplexer 220. Based on the control signal (sel1), the output of demultiplexer 220 can be provided to the decoder 240 or to the hard disk drive 500. The compression selection unit 400 also generates a control signal (sel2) for setting the compression method of the supplied data stream in the data compression unit 300. Also, the compression select unit 400 generates a control signal (sel3) for enabling and disabling the decompression unit 600. Furthermore, compression selection unit 400 generates a control signal (sel4) for setting the format of the data stream output from the decoder unit 200. The control signal (sel2) is composed of 2 bits for selecting one of the three compression methods. The selected compression method may use only one of the above-described methods or may use a combination of the above-described methods. For example, it is possible to convert the format of the video signal to 4:2:0 format while also reducing the resolution of the MPEG-2 data stream output from the decoder unit 200.

The hard disk drive (HDD) 500 stores the MPEG-2 video and audio signals, which have been compressed by the data compression unit 300 according to the method selected by the compression selection unit 400. The amount of data stored on the hard disk drive (HDD) 500 depends on the combination of the methods selected by the compression selection unit 400 and it is possible to store the video and the audio signals reduced to 1/16 of their uncompressed size according to the compression method selected. In other words, the apparent useful capacity of data storage can be increased with a device according to the present invention.

The decompression unit 600 performs MPEG decoding on the video and the audio signals stored in the hard disk drive (HDD) 500. In a video encoder 700, the decoded video and audio signals are converted into a video format such as NTSC or PAL according to the control signal (sel4) from the compression unit 400.

Preferably, the decoder unit 200 includes a demodulator 210, a demultiplexer 220, a format setting unit 230 and a decoder 240.

The demodulator 210 demodulates the broadcasting signal selected by the tuner 100. The demodulate broadcasting signal comprises the digital data stream which the broadcast station intended to transmit. In this embodiment, the digital data stream has MPEG-2 format, and is compressed based on MPEG-2 standard.

The demultiplexer 220 separates the digital data stream into video and audio signals and the hard disk drive (HDD) 500 stores the video and audio signals which were separated by the demultiplexer 220. The video signal and the audio signal held in the hard disk drive (HDD) 500 are compressed according to the MPEG-2 standard. Additionally, the demultiplexer 220 sends the video and audio signals directly to the hard disk drive (HDD) 500 when the control signal (sel1) from the compression select unit 400 is enabled. Consequently, in the case of a video signal requiring high quality, it is possible to store the video signal in the hard disk drive (HDD) without carrying out a separate compression process.

The format setting unit 230 sets, in response to the control signal (sel4) from the compression select unit 400, the data stream having MPEG-2 format outputted from the demultiplexer 230 to be any one of PES format in a packet unit and TS format in a pack unit. The format setting unit 230 preferably sets the output of the demultiplexer 220 to be TS format when the control signal (sel4) is enabled, and the output of the demultiplexer 220 to be PES format when the control signal (sel4) is disabled. Here, if the data stream is PES unit, the data stream from the demultiplexer 230 is supplied to the decoder 240 as it is, and has a signal format capable of being stored in a scrambled format on the hard disk drive (HDD). If the data stream is TS unit, the output of the demultiplexer 220 may be stored on the hard disk drive (HDD) 500 in unscrambled format. The scrambling term used herein refers to the broadcast station or the enterpriser of the cable networks encoding the broadcasting signal so that only viewers authorized to view the broadcasting signal are able to watch the broadcasting signal. The format setting unit 230 causes the broadcasting signal to be stored under encoding or to be decoded before being stored. The decoder 240 performs MPEG decoding on the video signal and the audio signal.

Preferably, the data compression unit 300 comprises a data conversion unit 310 and an encoder 320. The data conversion unit 310 is controlled by the compression selection unit 400 and reduces the amount of data in the decompressed video and audio signals from the decoder 240 depending on one of the three methods discussed above. The first method converts a video signal having 4:4:2 format to a video signal having 4:2:0 format. The second method removes even-numbered frames of the moving video signal. The third method reduces the resolution of the video signal. The encoder 320 compresses the data stream which has already been compressed according to MPEG-2 format.

Referring to Figure 3, the data compression unit 300 comprises a memory 311, a frame setting unit 312, a format conversion unit 313 and a scaler 314.

The memory 311 receives video and audio signals, which have been decompressed by the decoder 240, and stores them frame by frame. The frame setting unit 312 is enabled and disabled by the control signal (sel2) from the compression selection unit 400 and, when enabled, receives the video signal stored in the memory 311 before removing even-numbered frames therefrom and sending the remaining frames back to the memory 311, i.e. a video signal having only odd-numbered frames is stored in the memory 311.

The format conversion unit 313 is enabled and disabled by the control signal (sel2) and, when enabled, converts the format of the video signal held in the memory 311 to 4:2:0 format. The 4:2:0 format is the ratio of the sampling frequencies of the luminance signal to the colour difference signals and is based on International Telecommunication Union-Radio Communication Sector (ITU-R) recommendation 601. This format reduces the data amount of the video signal by using the characteristic that the human eye is primarily sensitive to the luminance rather than colour. The format of a video signal not having the colour difference signal (Cb, Cr) removed is referred to as 4:4:4 format. The format of a video signal having the colour difference signals (Cb, Cr) reduced to 1/2 for compressing the video signal is referred to as 4:2:2 format. The format of a video signal having the color difference signals (Cb, Cr) reduced to 1/4 is referred to as 4:2:0 format. MPEG-2 format generally transmits and receives video signals in 4:2:2 video format and the format conversion unit converts 4:2:2 video signals into 4:2:0 video signals, thereby compressing the video signal by 50%.

The scaler 314 is enabled and disabled by the control signal sel2 and, when enabled, reduces the resolution of the video signal held in the memory 311. For example, if the resolution of an input video signal is 800 × 600, the scaler 311 reduces it to 640 × 480 or less. The reduced-resolution video signals are stored back in the memory 311. Thereby, a video signal held in the memory 311 is compressed compared with the video signal supplied to the tuner 100 and, hence, when the compressed data is stored in the hard disk drive (HDD) 500, the available recording time of the multimedia data becomes longer.

Although a particular exemplary embodiment of the present invention has been disclosed with reference to the appended drawing figures and the preferred embodiments of the present invention corresponding to the drawing figures has been described, it should be understood that the descriptions in the present specification are only for illustrative purpose, and not for limiting the scope of the present invention.

Also, those who are skilled in the art will appreciate that various modifications, additions and substitutions are possible without departing from the scope and spirit of the present invention. Therefore, it should be understood that the present invention is limited only to the accompanying claims and the equivalents thereof, and includes the aforementioned modifications, additions and substitutions.

## Claims

1. An apparatus for recording audio and/or video data, the apparatus comprising a storage unit (500) for storing audio and/or video data and being **characterised by** a decoding means (240) for decoding a coded input signal, multimode compression means (310) for selectively compressing decoded signals from the decoding means (240) using a plurality of compression techniques and an encoding means (320) for encoding means for encoding compressed signals output by the multimode compression means (310), the output of the encoding means (320) being provided to the storage unit (500) for storage.

2. An apparatus according to claim 1, including switching means (220) for selectively routing input audio and/or video signals to the decoding means (240) or directly to the storage unit (500).

3. An apparatus for recording multimedia data comprising:
a receiving unit for receiving a compressed multimedia signal;
a decoder unit for decoding the multimedia signal into a data stream having a predetermined format;
a data compression unit for reducing a data amount of the data stream by a certain amount and encoding the reduced data stream;
a compression select unit for setting a compressibility of the data compression unit; and
a storage unit for storing the encoded data.

4. The apparatus of claim 3, wherein the decoder unit comprises:
a demodulator for removing a carrier wave from the multimedia signal;
a demultiplexer for decoding the multimedia signal into a video signal and an audio signal after the carrier wave is removed from the multimedia signal; and
a decoder for decompressing the video signal and the audio signal.

5. The apparatus of claim 4, further comprising a format setting unit for setting the format of the video signal and the audio signal from the demultiplexer to one of PES in a packet unit and TS in a pack unit.

6. The apparatus of claim 3, wherein the data compression unit comprises:
a data conversion unit for reducing a portion of the data of the decompressed video signal and the audio signal according to the compressibility set by the compression select unit; and
an encoder unit for recompressing the video data and the audio data after the portion of the data is reduced by the data conversion unit.

7. The apparatus of claim 6, wherein the data conversion unit comprises:
a memory for storing the decompressed data from the decoder in a frame unit;
a frame setting unit, enabled by the compression select unit, for removing frames of the data stored on the memory and re-storing the data in the memory; and
an encoder for compressing the data stream re-stored in the memory.

8. The apparatus of claim 7, wherein the frame setting unit removes even-numbered frames.

9. The apparatus of claim 7, further comprising a format conversion unit, enabled by the compression select unit, for converting the signal format of the video signal held in the memory to 4:2:0 format and re-storing the data in the memory.

10. The apparatus of claim 9, further comprising a scaler, enabled by the compression select unit, for reducing the resolution of the video signal stored in a frame unit on the memory to a certain resolution and re-storing the data in the memory.

11. The apparatus of claim 3, wherein the compression select unit generates a first control signal that causes the video signal and the audio signal to be outputted to any one of the decoder and the storage unit by controlling the demultiplexer, and a second control signal that causes at least one of the frame setting unit, the format conversion unit and the scaler to be enabled by controlling the data conversion unit.

12. The apparatus of claim 3, wherein the predetermined format is selected from the group consisting of MPEG-1, MPEG-2, MPEG-3, and MPEG-4.

13. The apparatus of claim 3, wherein the receiving unit receives a multimedia signal compressed with any one of the compression formats selected from the group consisting of MPEG-1, MPEG-2, MPEG-3, and MPEG-4.

14. A method for recording multimedia data comprising:
receiving a compressed multimedia signal;
decoding the multimedia signal into a data stream having a predetermined format;
reducing a data amount of the data stream by a certain amount and encoding the reduced data stream;
setting a compressibility of the data as reduced in the reducing step; and
storing the encoded data.

15. The method of claim 14, further comprising the steps of:
removing a carrier wave from the multimedia signal;
decoding the multimedia signal into a video signal and an audio signal after the carrier wave is removed from the multimedia signal; and
decompressing the video signal and the audio signal.

16. The method of claim 14, further comprising the steps of:
setting the format of the video signal and the audio signal to one of PES in a packet unit and TS in a pack unit.

17. The method of claim 14, further comprising the steps of:
reducing a portion of the data of the decompressed video signal and the audio signal according to the compressibility set; and
recompressing the video data and the audio data after
the portion of the data is reduced by the data conversion unit.

18. The method of claim 17, further comprising the step of:
storing the decompressed data in a memory;
removing frames of the data;
re-storing the data; and
compressing the re-stored data stream.

19. The method of claim 18, wherein even-numbered frames are removed during the removing step.

20. The method of claim 18, further comprising the step of converting the signal format of the video signal to 4:2:0 format and re-storing the data.

21. The method of claim 20, further comprising the step of reducing the resolution of the video signal to a certain resolution and re-storing the data.

22. The method of claim 14, further comprising the steps of:
generating a first control signal that causes the video signal and the audio signal to be outputted to any one of a decoder and a storage unit by controlling a demultiplexer, and a second control signal that causes at least one of the steps selected from the group consisting of removing frames, converting the signal format, and reducing the resolution of the video signal, to be performed.

23. The apparatus of claim 14, wherein the predetermined format is selected from the group consisting of MPEG-1, MPEG-2, MPEG-3, and MPEG-4.

24. The apparatus of claim 14, wherein the receiving step further comprises receiving a multimedia signal compressed with any one of the compression formats selected from the group consisting of MPEG-1, MPEG-2, MPEG-3, and MPEG-4.
